# EUROPÄISCHE PATENTSCHRIFT

(11) **EP 1 309 834 B1**
(45) Veröffentlichungstag und Bekanntmachung des Hinweises auf die Patenterteilung: **18.04.2007**
(21) Anmeldenummer: 01960664.9
(22) Anmeldetag: 14.08.2001
(51) Int. Cl.: G01C 19/56

(54) **DREHRATENSENSOR UND DREHRATENSENSORSYSTEM**
ROTATION SPEED SENSOR AND ROTATION SPEED SENSOR SYSTEM
CAPTEUR DE VITESSE DE ROTATION ET SYSTEME DE CAPTEUR DE VITESSE DE ROTATION

(30) Priorität: 18.08.2000 DE 10040418
(43) Veröffentlichungstag der Anmeldung: 14.05.2003
(73) Patentinhaber: Hahn-Schickard-Gesellschaft für angewandte Forschung e.V., 78052 Villingen-Schwenningen (DE)
(72) Erfinder: GEIGER, Wolfram, 79112 Freiburg - Tiengen (DE); LANG, Walter, 78050 Villingen-Schwenningen (DE)
(74) Vertreter: Schoppe, Fritz
(86) Internationale Anmeldenummer: PCT/EP2001/009400
(87) Internationale Veröffentlichungsnummer: WO 2002/016871

(56) Entgegenhaltungen:
- WO-A-00/29855
- WO-A-99/12002
- DE-A- 4 414 237
- DE-A- 4 428 405
- DE-C- 19 641 284

## Beschreibung

Die vorliegende Erfindung bezieht sich auf Drehratensensoren und insbesondere auf Drehratensensoren, bei denen die Rückwirkung von der Sekundärschwingung aufgrund einer Coriolis-Kraft auf die Anregungseinrichtung zum Erzeugen einer Primärschwingung einerseits und die Übertragung der Primärschwingung auf die Erfassung der Sekundärschwingung andererseits weitestgehend minimiert sind.

Vibrierende Coriolis-Kraft-Drehratensensoren besitzen vielfältige Anwendungsfelder, von denen beispielsweise die Positionsbestimmung eines Automobils oder eines Flugzeuges zu nennen ist. Allgemein besitzen solche Sensoren eine bewegliche mechanische Struktur, welche zu einer periodischen Schwingung angeregt wird. Diese periodische, durch Anregung erzeugte Schwingung wird als Primärschwingung bezeichnet. Erfährt der Sensor eine Drehung um eine Achse senkrecht zur Primärschwingung oder Primärbewegung, so führt die Bewegung der Primärschwingung zu einer Coriolis-Kraft, die proportional zur Meßgröße, d.h. der Winkelgeschwindigkeit, ist. Durch die Coriolis-Kraft wird eine zweite, zur Primärschwingung orthogonale Schwingung angeregt. Diese zweite, zur Primärschwingung orthogonale Schwingung wird Sekundärschwingung genannt. Die Sekundärschwingung, die auch als Detektionsschwingung bezeichnet wird, kann durch verschiedene Meßverfahren erfaßt werden, wobei ihre Amplitude als Maß für die auf den Drehratensensor wirkende Drehrate dient.

Um die Primärschwingung zu erzeugen, werden unter anderem thermische, piezoelektrische, elektrostatische und induktive Verfahren verwendet, welche in der Technik bekannt sind. Zu der Erfassung der Sekundärschwingung sind piezoelektrische, piezoresistive und kapazitive Prinzipien Stand der Technik.

Bekannte mikromechanische Drehratensensoren sind in K. Funk, A. Shilp, M. Offenberg, B. Elsner und F. Lärmer, "*Surface Micromachining of Resonant Silicon Structures*", The 8th International Conference on Solid-State Sensors and Actuators, Eurosensors IX, NEWS, S. 50-52, beschrieben. Insbesondere weist ein in dieser Schrift beschriebener bekannter quasi-rotierender Drehratensensor einen kreisförmigen Schwinger auf, der in zwei Richtungen drehbar an einer Basis aufgehängt ist. Der Schwinger des bekannten Drehratensensors zeigt eine bezüglich einer x-y-Ebene scheibenförmige Gestalt, wobei an zwei sich gegenüberliegenden Seiten der Scheibe Kammelektroden-Konfigurationen angebracht sind. Eine Kammelektroden-Konfiguration wird zum Treiben des Schwingkörpers verwendet, wobei sich dieselbe aus feststehenden Kammelektroden und den Kammelektroden des Schwingers, die in die feststehenden Kammelektroden eingreifen, zusammensetzt. Eine dazu ähnliche Kammelektrodenerfassungsanordnung besteht aus feststehenden Kammelektroden, die in entsprechende Kammelektroden eingreifen, die an dem Primärschwinger angebracht sind. Die eingangsseite Kammelektroden-Konfiguration zum Treiben des Schwingers, die auch Combdrive genannt wird, ist auf geeignete Weise mit einer Erregungsspannung verbunden, derart, daß eine erste Kammelektroden-Konfiguration mit einer Wechselspannung gespeist wird, wohingegen eine zweite Kammelektroden-Konfiguration des Combdrives mit einer zur ersten Spannung um 180° phasenverschobenen zweiten Spannung gespeist wird. Durch die angelegte Wechselspannung wird der Schwinger zu einer Drehschwingung um die z-Achse erregt, die auf der x-y-Ebene senkrecht steht. Die Schwingung des Schwingers in der x-y-Ebene ist die vorher genannte Primärschwingung.

Wird der bekannte Drehratensensor nun mit einer bestimmten Winkelgeschwindigkeit um eine y-Achse gedreht, so wirkt auf den Schwinger eine Coriolis-Kraft, die zu der angelegten Winkelgeschwindigkeit um die y-Achse proportional ist. Diese Coriolis-Kraft erzeugt eine Drehschwingung des Schwingers um die x-Achse. Diese Drehschwingung oder periodische "Verkippung" des Schwingers um die x-Achse kann mit den beiden unter dem Sensor liegenden Elektroden kapazitiv gemessen werden.

Ein Nachteil dieser bekannten Struktur besteht darin, daß die Primärschwingung und die Sekundärschwingung, die die Schwingung des Schwingkörpers aufgrund der auf denselben wirkenden Coriolis-Kraft ist, von einem einzigen Schwinger ausgeführt werden, der mittels eines zweiachsigen Gelenks aufgehängt ist, um die beiden zueinander orthogonalen Schwingungen ausführen zu können. Die beiden Schwingungsmoden, d.h. die Primärschwingung und die Sekundärschwingung, sind daher nicht voneinander entkoppelt, weshalb die Eigenfrequenzen der Primär- und der Sekundärschwingung nicht unabhängig voneinander genau abgeglichen werden können, um eine möglichst hohe Erfassungsgenauigkeit des Drehratensensors zu erreichen. Ferner führt bei dem bekannten Drehratensensor die Sekundärschwingung dazu, daß die Kammelektrodenanordnung zum Treiben des Schwingers verkippt wird, wodurch die Primärschwingung von der Sekundärschwingung beeinflußt wird. Dadurch wird die Primärschwingung als Reaktion auf die Rückwirkung der Sekundärschwingung auf die Primärschwingung, d.h. als Reaktion auf eine Verkippung des Combdrives zur Erzeugung der Primärschwingung, unkontrolliert geändert und damit das Meßsignal verfälscht.

Ein weiterer bekannter Drehratensensor, der in dieser Schrift beschrieben ist, umfaßt zwei voneinander getrennte Schwingungsmassen, die durch jeweilige Combdrives, die über Federbalken mit jeweils einer Masse verbunden sind, in eine gegenphasige Schwingung versetzt werden können. Die beiden Massen sind über eine Federbalkenartordnung miteinander verbunden und führen aufgrund einer Aufhängung der Anordnung aus den beiden Massen und den Verbindungsstegen der Massen eine Drehschwingung in der x-y-Ebene durch, wenn der Drehratensensor einer Drehung um die z-Achse unterzogen wird. Eine Verschiebung der Anordnung aus den beiden Massen und den Federbalken, welche die Massen untereinander verbinden, in der y-Achse als Reaktion auf eine Drehung dieser Anordnung wird mittels vier Kammelektroden-Konfigurationen kapazitiv erfaßt.

Genauso wie der erste beschriebene bekannte Drehratensensor weist auch der zweite bekannte Drehratensensor lediglich einen einzigen Schwinger für sowohl die Primär- als auch die Sekundärschwingung auf, wodurch die beiden orthogonalen Schwingungsmoden miteinander verkoppelt sind, und die durch die Coriolis-Kraft erzeugte Sekundärschwingung auf die Primärschwingung rückwirken kann. Auch diese Struktur erlaubt daher keinen genauen, selektiven Abgleich der Eigenfrequenzen der Primär- und der Sekundärschwingung.

Ein weiteres bekanntes Vibrationsgyroskop ist in dem Artikel von P.Greiff u.a. mit dem Titel "*Silicon Monolithic Micromechanical Gyroscope*" in dem Konferenzband der Transducers 1991 auf den S. 966 bis 968 beschrieben. Dieses Gyroskop ist eine zweifach kardanische Struktur in der x-y-Ebene, die durch Torsionsfedern getragen wird. Eine rahmenförmige erste Schwingerstruktur umgibt eine plattenförmige zweite Schwingerstruktur. Die zweite Schwingerstruktur weist ein Trägheitselement auf, das aus der Ebene derselben in der z-Richtung vorsteht. Im Betrieb wird eine rotatorische Erregung um die y-Achse der ersten Schwingerstruktur über Torsionsfedern, die in Richtung der ersten Schwingung steif sind, auf die zweite Schwingerstruktur übertragen. In der Anwesenheit einer Drehwinkelgeschwindigkeit um die z-Achse wird eine Coriolis-Kraft in der y-Richtung erzeugt, die an dem vorstehenden Trägheitselement oder Gyroelement angreift, um die zweite Schwingerstruktur um die x-Achse auszulenken, wodurch die zweite Schwingerstruktur eine zur Erregungsschwingung orthogonale Coriolis-Schwingung um die x-Achse ausführt, die durch die Torsionsfedern, die die zweite Schwingerstruktur an der ersten Schwingerstruktur aufhängen, ermöglicht wird. Die Coriolis-Kraft, die bei diesem Gyroskop lediglich in y-Richtung anliegt, führt nicht zu einer Bewegung der restlichen Struktur, da dieselbe in der y-Richtung fest gehalten ist. Lediglich das in z-Richtung vorstehende Gyroelement bietet einen Angriffspunkt für die Coriolis-Kraft, damit dieselbe eine meßbare zur Zwangsdrehung proportionale Bewegung bewirken kann.

Die DE 19641284 C1 offenbart einen Drehratensensor mit entkoppelten orthogonalen Primär- und Sekundärschwingungen, der einen Primäroszillator, einen Sekundäroszillator, eine Primärschwingeraufhängung und eine Sekundärschwingeraufhängung aufweist, wobei die Primärschwingeraufhängung den Primärschwinger in Richtung der Primärbewegung führt, und die Sekundärschwingeraufhängung die Primärbewegung auf den Sekundärschwinger überträgt und den Sekundärschwinger in der Richtung der Sekundärbewegung führt, und eine Übertragung der Sekundärbewegung zurück auf den Primärschwinger im wesentlichen verhindert. Anders ausgedrückt hat der Primärschwinger aufgrund der Primärschwingeraufhängung lediglich einen Bewegungsfreiheitsgrad, nämlich in Richtung der Primärschwingung. Der Sekundärschwinger hat jedoch aufgrund der Sekundärschwingeraufhängung zwei Freiheitsgrade, nämlich in Richtung der Primärschwingung und in Richtung der Sekundärschwingung. Die Primärschwingung wird also direkt auf den Sekundärschwinger übertragen und die durch Drehung des Sensors, d. h. aufgrund der dann einsetzenden Coriolis-Kraft, erzeugte Sekundärschwingung wird nicht auf den Primärschwinger übertragen. Ein wesentlicher Vorteil dieses bekannten Drehratensensors besteht darin, daß der Antrieb der Primärschwingung nicht durch die Sekundärschwingung beeinflußt wird. Nichtideale Eigenschaften, beispielsweise von elektrostatischen Kammantrieben, welche auch als Levitation bezeichnet werden, können weitgehend unterdrückt werden, da die Antriebseinheit, welche dem Primärschwinger zugeordnet ist, einen einzigen Freiheitsgrad besitzt.

Die WO 99/120002 offenbart mikromechanisch hergestellte Gyroskope mit einem ersten und einem zweiten koplanaren Körper, welche über einem Substrat aufgehängt sind und in ihrer Ebene relativ zum Substrat bewegbar sind. Der erste Körper wird entlang einer Anregungsachse angeregt und ist relativ zu dem zweiten Körper bewegbar. Der zweite Körper ist so verankert, daß er sich nicht entlang der Bewegungsachse des ersten Körpers bewegen kann, jedoch zusammen mit dem ersten Körper entlang der Transversalachse.

Die WO 00/29855 offenbart ein Multielement-Mikro-Gyroskop mit einem Antriebselement, das um die Antriebsachse und eine Ausgabeachse schwingt. Die Schwingung des Antriebselements um die Ausgangsachse hat eine kleine Amplitude, ist jedoch für die Funktion des Sensors unabdingbar nötig. Weiterhin hat das Gyroskop ein Ausgabeelement, das um die Ausgangsachse schwingt. Die Coriolis-Kraft wird von dem Ausgabeelement zu dem Eingabeelement übertragen. Damit wird die Bewegung des Antriebselements um die Antriebsachse nicht auf das Ausgabeelement übertragen. In diesem Sinne sind sie entkoppelt.

Der Drehratensensor, der in der WO 99/12002 offenbart ist, und der Drehratensensor, der in der WO 00/29855 offenbart ist, haben gemeinsam, daß der Primärschwinger mit zwei Freiheitsgraden ausgestattet ist, während der Sekundärschwinger mit nur einem Freiheitsgrad ausgestattet ist. Die Primärschwingung wird bei diesen beiden Drehratensensoren nicht auf den Sekundärschwinger übertragen, während die Sekundärschwingung, die aufgrund der Coriolis-Kraft bei einer Drehung des Sensors erzeugt wird, auf den Sekundärschwinger übertragen wird.

Nachteilig an sämtlichen bekannten Drehachsensensoren ist die immer noch nicht optimale Entkopplung von Anregung und Erfassung, d. h. Primärschwingung und Sekundärschwingung.

Insbesondere können Fehlersignale, die mit einer Bewegung des Sekundärschwingers entsprechend dem ersten Freiheitsgrad zusammenhängen, zwar unterdrückt werden, da beim Sekundärschwinger dieser Freiheitsgrad unterbunden ist. Eine Rückwirkung der Sekundärschwingung auf das Antriebselement wird dagegen nicht unterdrückt.

Die DE 44 14 237 A1 offenbart einen mikromechanischen Schwinger eines Schwingungsgyrometers mit zwei gegenphasig schwingenden Schwingmassen, die über einen Koppelbereich verbunden sind.

Die DE 44 28 405 A1 offenbart einen Drehratensensor mit zwei Schwingmassen, welche über Federelemente miteinander zu einem schwingungsfähigen System verbunden sind. Die Schwingmassen sind so angeordnet und ausgebildet, daß das schwingungsfähige System nur Schwingungen in mindestens zwei Schwingungsmodi parallel zur Substratebene ausführen kann.

Die Aufgabe der vorliegenden Erfindung besteht darin, einen Drehratensensor sowie ein Drehratensensorsystem zu schaffen, bei denen Fehlersignale aufgrund unerwünschter Rückwirkungen minimiert sind.

Diese Aufgabe wird durch einen Drehratensensor nach Patentanspruch 1 sowie durch ein Drehratensensorsystem nach Patentanspruch 10 gelöst.

Der vorliegenden Erfindung liegt die Erkenntnis zugrunde, daß für eine vollständige Entkopplung von Primär- und Sekundärschwingung bzw. von Anregung und Erfassung von dem Konzept mit zwei Schwingern weggegangen werden muß und stattdessen auf drei Schwinger übergegangen werden muß. Der Primärschwinger, der durch eine Anregung, die vorzugsweise elektrostatisch durchgeführt wird, in eine Primärschwingung versetzt wird, wird von einer Primärschwingeraufhängung bezüglich des Substrats derart gehalten, daß er lediglich eine Primärschwingung durchführen kann. Die Primärschwingung wird über eine Anregungs-Probemasse-Kopplungseinrichtung auf eine Probemasse übertragen, welche sowohl die Primärschwingung als auch die Sekundärschwingung aufgrund einer Coriolis-Kraft ausführen kann. Die Anregungs-Probemasse-Kopplungseinrichtung ist nun derart ausgelegt, daß sie zwar die Primärschwingung auf die Probemasse übertragen kann, daß sie jedoch hinsichtlich der Sekundärschwingung elastisch ist, so daß die Sekundärschwingung der Probemasse nicht zurück zum Primärschwinger übertragen werden kann. Im Gegensatz zum Stand der Technik, der lediglich zwei Schwinger verwendet, wird die Erfassung nicht aufgrund der Auslenkung der Probemasse durchgeführt, sondern die Sekundärschwingung wird über eine Probemasse-Erfassungs-Kopplungseinrichtung auf einen Sekundärschwinger übertragen, der mittels einer Sekundärschwingeraufhängung derart aufgehängt ist, daß er lediglich in Sekundärschwingungsrichtung schwingen kann, während er in den beiden anderen dazu orthogonalen Richtungen starr auf-gehängt ist. Die Probemasse-Erfassungs-Kopplungseinrichtung wiederum ist derart ausgelegt, daß sie zwar die Sekundärschwingung starr auf den Sekundärschwinger überträgt, daß sie jedoch in Richtung der Primärschwingung elastisch ist.

Somit ist ein zweifach entkoppelter Drehratensensor geschaffen, der einen Primärschwinger aufweist, der lediglich zur Anregung dient, der einen Sekundärschwinger aufweist, der lediglich zur Erfassung dient, und der zusätzlich eine Probemasse aufweist, die gewissermaßen dazu vorgesehen ist, aufgrund der Coriolis-Kraft in Sekundärschwingung versetzt zu werden. Es wird darauf hingewiesen, daß lediglich die Probemasse beide Schwingungen, also die Primärschwingung und die Sekundärschwingung ausführt, während die anderen Elemente lediglich eine einzige Schwingung aufgrund ihrer jeweiligen Aufhängungen ausführen können.

Durch die zueinander gewissermaßen orthogonale Ausgestaltung der Anregungs-Probemasse-Kopplungseinrichtung, welche zwar die Primärschwingung überträgt, in Richtung der Sekundärschwingung jedoch elastisch ist, um diese nicht auf den Primärschwinger zu übertragen, und der Probemasse-Erfassungs-Kopplungseinrichtung, welche zwar in Sekundärschwingungsrichtung starr ist, jedoch in Primärschwingungsrichtung elastisch ist, um nicht die Primärschwingung auf den Sekundärschwinger zu übertragen, ist eine optimale Entkopplung von Anregung und Erfassung geschaffen, so daß die Sekundärschwingung nicht zurück auf den Primärschwinger, also die Anregung wirkt, während gleichzeitig nicht die Anregung auf die Erfassung Auswirkungen hat, zumal die Erfassungschwingungen typischerweise in Größenordnungen kleiner als die Anregungsschwingungen sind.

Es sei darauf hingewiesen, daß jegliche Federeinrichtungen, also sowohl die Primärschwingeraufhängung als auch die Sekundärschwingeraufhängung als auch die Anregungs-Probemasse-Kopplungseinrichtung als auch die Probemasse-Erfassungs-Kopplungseinrichtung immer nur in einer Richtung elastisch sind, während sie in den beiden anderen Richtungen starr sind, so daß durch das erfindungsgemäße Zusammenspiel erreicht werden kann, daß sowohl der Primärschwinger der Anregungseinheit als auch der Sekundärschwinger der Erfassungseinheit lediglich einen Freiheitsgrad der Bewegung haben, während lediglich die Probemasse in beiden Richtungen ausgelenkt werden kann, wobei jedoch die Probemasse nicht unmittelbar zur Erfassung der Coriolis-Auslenkung herangezogen wird.

Bevorzugte Ausführungsbeispiele der vorliegenden Erfindung werden nachfolgend bezugnehmend auf die beiliegenden Zeichnungen detailliert erläutert. Es zeigen:
- Fig. 1: ein Prinzipschaltbild des erfindungsgemäßen Konzepts;
- Fig. 2: einen erfindungsgemäßen Drehratensensor;
- Fig. 3: einen erfindungsgemäßen Drehratensensor gemäß einem alternativen Ausführungsbeispiel;
- Fig. 4: ein Drehratensensorsystem mit gekoppelten Primärschwingern; und
- Fig. 5: ein Drehratensensorsystem mit gekoppelten Primärschwingern und mit gekoppelten Sekundärschwingern.

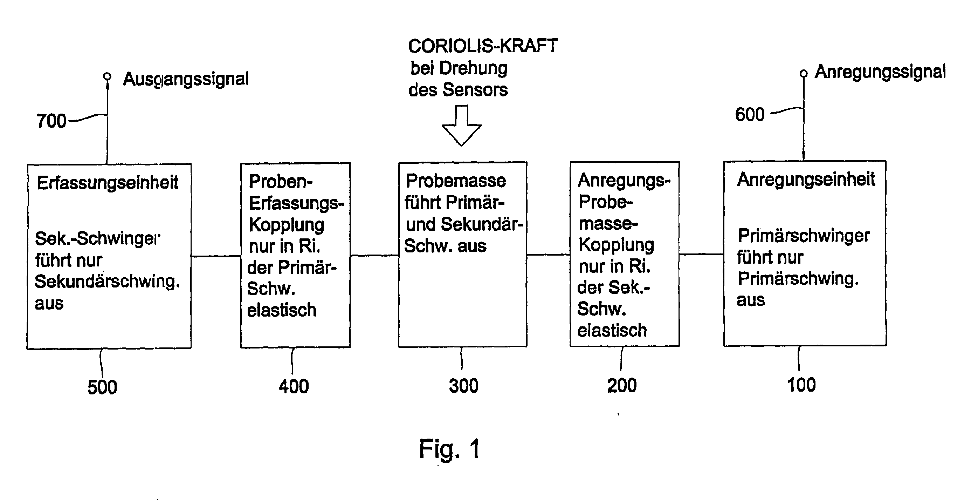

Im nachfolgenden wird auf Fig. 1 Bezug genommen, um die prinzipielle Ausgestaltung eines erfindungsgemäßen Drehratensensors näher zu erläutern. Der erfindungsgemäße Drehratensensor setzt sich aus einer Anregungseinheit 100, einer Anregungs-Probemasse-Kopplungseinrichtung 200, einer Probemasse 300, einer Probemasse-Erfassungs-Kopplungseinrichtung 400 und einer Erfassungseinheit 500 zusammen. Die Anregungseinheit 100 umfaßt einen Primärschwinger, der eine Primärschwingung ausführt, welche durch einen entsprechenden Wandler, wie z. B. einen "Combdrive" oder Kammantrieb aus einem typischerweise elektrischen Anregungssignal 600 erzeugt wird. Wenn eine Coriolis-Kraft bei einer Drehung des Sensors um eine entsprechende Achse erzeugt wird, so gibt die Erfassungseinheit 500 als Ausgangssignal eine typischerweise elektrische Größe als Ausgangssignal 700 aus, wobei das Ausgangssignal ein Maß für die Drehung des Sensors ist. Aus dem in Fig. 1 gezeigten Blockschaltbild wird deutlich, daß sowohl für die Anregung als auch die Erfassung zwei Einheiten vorgesehen sind, die über sowohl die Anregungs-Probemassen-Kopplungseinrichtung 200 als auch die Probemasse-Erfassungs-Kopplungseinrichtung 400 entkoppelt sind. Beim erfindungsgemäßen Drehratensensor handelt es sich somit um einen zweifach entkoppelten Drehratensensor, bei dem die Auslenkung der Probemasse in Richtung der Coriolis-Kraft, also die Sekundärschwingung, nicht unmittelbar zur Drehratendetektion eingesetzt wird, sondern zunächst über die Probemassen-Erfassungs-Kopplungseinrichtung auf die Erfassungseinheit 500 übertragen wird, um erst dann abgenommen zu werden, um das Ausgangssignal 700 zu erzeugen.

Aufgrund der erfindungsgemäßen Trennung der Funktionalitäten können sowohl die Anregungseinheit als auch die Erfassungseinheit derart ausgestaltet werden, daß der Primärschwinger in der Anregungseinheit und der Sekundärschwinger in der Erfassungseinheit so mittels einer Primärschwingeraufhängung bzw. einer Sekundärschwingeraufhängung gegenüber einem Substrat getragen werden können, daß kein Schwinger eine parasitäre Bewegung ausführt. Die Entkopplung der Probemasse von der Anregungseinheit, also daß keine Sekundärschwingung auf die Anregungseinheit übertragen wird, wird durch die Anregungs-Probemasse-Kopplungseinrichtung 200 erreicht, die ansonsten steif ist, jedoch lediglich in der Richtung der Sekundärschwingung elastisch ist, so daß die Sekundärschwingung der Probemasse nicht auf die Anregungseinheit übertragen werden kann. Analog dazu ist die Probemassen-Erfassungs-Kopplungseinrichtung 400 ausgeführt, die ansonsten steif ist, jedoch in Richtung der Primärschwingung elastisch ist, so daß eine Primärschwingung der Probemasse 300 nicht auf die Erfassungseinheit 500 und insbesondere den Sekundärschwinger derselben übertragen werden kann, da Schwingungen lediglich über im wesentlichen steife Verbindungen übertragen werden können, während eine elastische Verbindung dazu führt, daß die Schwingung aufgrund der Elastizität der Verbindung nicht auf das jeweilige andere Element übertragen werden kann.

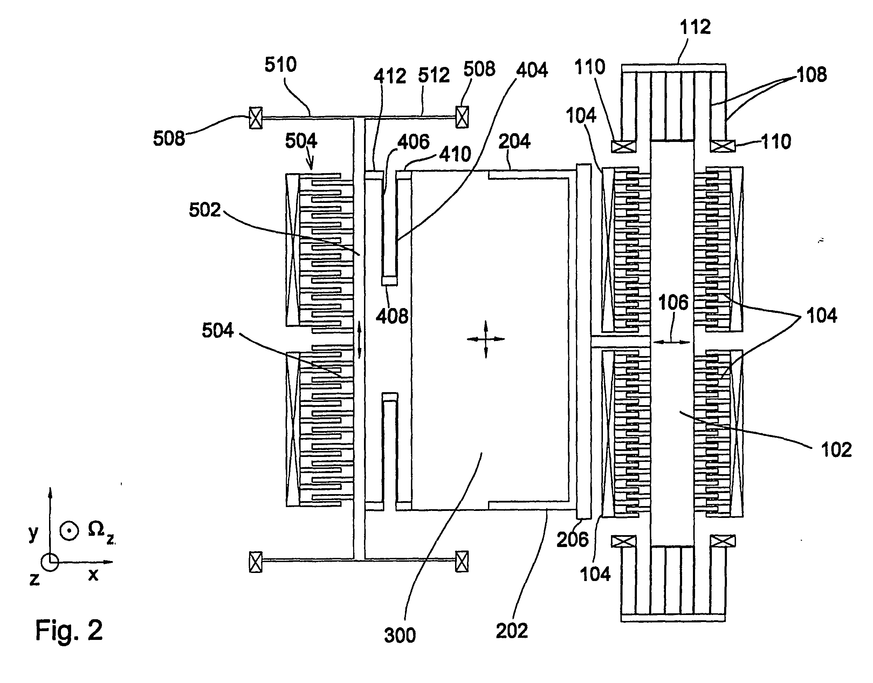

Fig. 2 zeigt einen Drehratensensor gemäß einem ersten Ausführungsbeispiel der vorliegenden Erfindung. Links unten in Fig. 2 ist aus Darstellungsgründen ein Koordinatensystem eingezeichnet, das sich aus der x-Achse, aus der y-Achse und aus der z-Achse zusammensetzt, wobei die drei Richtungen alle zueinander orthogonal sind. Darüberhinaus ist die Drehrichtung durch Ω_{z} um die z-Achse herum dargestellt. Obgleich im nachfolgenden lediglich lineare Sensoren diskutiert werden, ist es für Fachleute selbstverständlich, daß das erfindungsgemäße Konzept ohne weiteres auch auf Rotationsschwingungssensoren angewendet werden kann. Bezüglich der Austauschbarkeit zwischen linearen Schwingungen und Rotationsschwingungen wird beispielsweise auf die bereits erwähnte DE 10641284 C1 verwiesen. Bei den nachfolgend diskutierten erfindungsgemäßen Drehratensensoren wird aus Übersichtlichkeitsgründen eine lineare Anregungsschwingung in x-Richtung und eine Drehung des Drehratensensors insgesamt um die z-Achse angenommen, so daß sich eine Sekundärschwingung in Richtung der y-Achse aufgrund der auf den Drehratensensor wirkenden Coriolis-Kraft ergibt.

Die Anregungseinheit 100 umfaßt einen Primärschwinger 102, der durch die im vorliegenden Beispiel 4 eingezeichneten Kammantriebe in eine Primärschwingung in x-Richtung versetzt werden kann, wie es durch einen Pfeil 106 dargestellt ist. Die Anregungseinheit 100 umfaßt ferner neben den Kammantrieben als Erregungseinrichtung eine Primärschwingeraufhängung, die bei dem bevorzugten Ausführungsbeispiel, das in Fig. 2 gezeigt ist, aus Federbalken 108, Verankerungspunkten 110 und Verbindungsstrukturen 112 besteht. Die Federbalken 108 haben typischerweise eine rechteckige Querschnittsform, wobei die Federbalken bei einer Belastung derselben entlang der kleinen Seitenlänge eher elastisch sind, während sie bei einer Belastung derselben entlang der großen Seitenlänge eher starr sind. Die gewünschten absoluten Elastizitäts- bzw. Starrheits-Werte können ohne weiteres durch die Geometrie und das Material der Federbalken eingestellt werden. Wie es aus Fig. 2 ersichtlich ist, sind die Federbalken ferner derart eingebaut, daß die gesamte Primärschwingeraufhängung keine Bewegung des Primärschwingers in y-Richtung zuläßt.

An dieser Stelle sei darauf hingewiesen, daß mit einem Substrat verbundene Elemente durch ein Kreuz gekennzeichnet sind, was für die Verankerungspunkte 110 und die feststehenden Teile der Kammantriebe 104 zutrifft.

Der erfindungsgemäße Drehratensensor umfaßt ferner eine Probemasse 300, welche, wie es durch den mittig gezeichneten Doppelpfeil angedeutet ist, sowohl in x- als auch in y-Richtung auslenkbar ist. Die Probemasse ist durch die Anregungs-Probemasse-Kopplungseinrichtung mit dem Primärschwinger 102 über einen ersten Federbalken 202 und einen zweiten Federbalken 204 sowie eine starre Verbindungsstruktur 206 verbunden. Wie es aus Fig. 2 deutlich wird, sind die beiden Federbalken 202, 204 der Anregungs-Probemasse-Kopplungseinrichtung entlang der y-Richtung auslenkbar, während sie entlang der x-Richtung auf Zug bzw. Druck beansprucht werden und keine Elastizität aufweisen. Somit wird sichergestellt, daß zwar die Primärschwingung in x-Richtung vom Primärschwinger auf die Probemasse übertragen wird, daß jedoch keine Rückübertragung der Sekundärschwingung auf den Primärschwinger stattfinden kann, da die Sekundärschwingung der Probemasse aufgrund der Elastizität der Federbalken 202, 204 nicht auf den Primärschwinger rückübertragen wird.

Die Probemassen-Erfassung-Kopplungseinrichtung 400 umfaßt, wie es in Fig. 2 gezeigt ist, Federbalken 404, 406, eine starre Verbindungsstruktur 408 zum Verbinden der beiden Federbalken 404, 406 sowie eine starre Verbindungsstruktur 410 zum Verbinden des Federbalkens 404 mit der Probemasse. Analog umfaßt die Probemassen-Erfassungs-Kopplungseinrichtung eine starre Verbindungsstruktur 412 zum Verbinden des Federbalkens 406 mit einem Sekundärschwinger 502 der Erfassungseinheit 500, auf die später eingegangen wird. Die starre Verbindungseinheit 408 ist keine Verankerung und somit nicht mit dem Substrat verbunden, wie es auch durch die Darstellung in der Fig. 2 dargestellt ist, da mit dem Substrat verbundene Einheiten stets durch ein Kreuz gekennzeichnet sind. Aus Fig. 2 ist zu sehen, daß die Federbalken 404, 406, welche parallel zu y-Achse angeordnet sind, in x-Richtung elastisch sind, so daß die Primärschwingung der Probemasse nicht auf den Sekundärschwinger 502 übertragen werden kann. Die Federbalken sind aufgrund ihrer Anordnung starr in y-Richtung, so daß die Sekundärschwingung sehr wohl zur Erfassungseinheit 500, welche den Sekundärschwinger 502 aufweist, übertragen werden kann.

Die Erfassungseinheit 500 umfaßt neben dem Sekundärschwinger 502 zwei Erfassungs-Elektrodenanordnungen 504, welche ebenso wie die Anregungscombdrives 104 jeweils aus einem feststehenden Teil und einem beweglichen Teil bestehen, wobei der bewegliche Teil mit dem Sekundärschwinger 502 in starrer Verbindung ist.

Die Erfassungseinheit 500 umfaßt ferner Verankerungen 508 sowie als weitere Bestandteile der Sekundärschwingeraufhängung Federbalken 510, 512. Aufgrund der Anordnung und Ausrichtung der Federbalken 510 und 512 ist erkennbar, daß die Federbalken bei einer Belastung des Sekundärschwingers in x-Richtung auf Zug bzw. Druck beansprucht werden, so daß der Sekundärschwinger 502 in x-Richtung keine Bewegung ausführen kann. Anders ist die Lage dagegen bei einer Kraft in y-Richtung auf den Sekundärschwinger 502. In diesem Fall können die Federbalken 510, 512 aufgrund ihres Querschnitts ausgelenkt werden, derart, daß der Sekundärschwinger die Sekun-därschwingung durchführen kann, welche dann durch die Erfassungs-Elektrodenanordnungen 504 z. B. kapazitiv erfaßt werden kann. Alternative Erfassungsmethoden sind ebenfalls möglich.

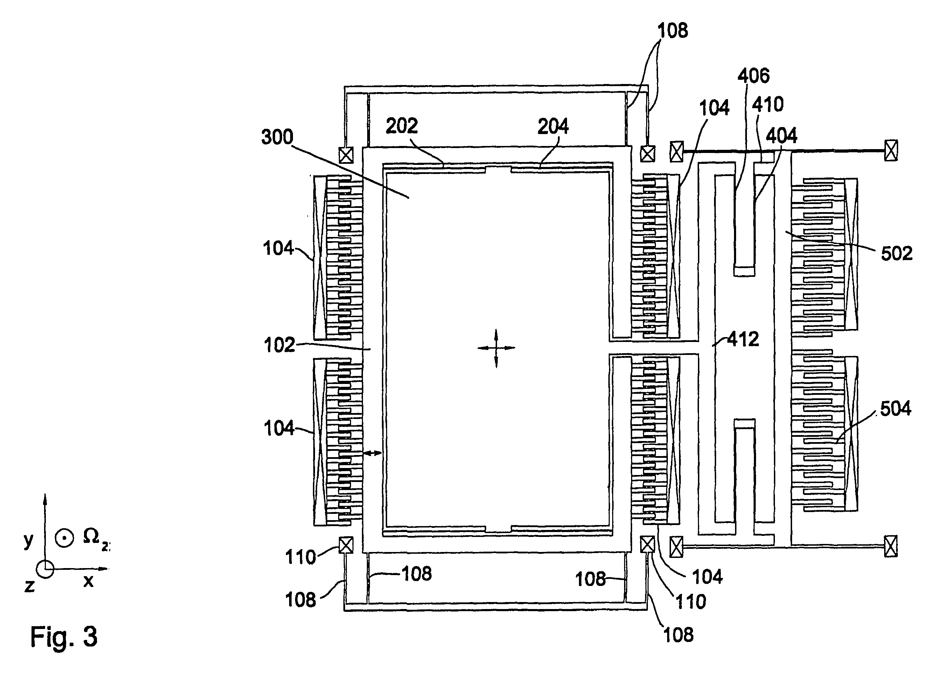

Fig. 3 zeigt ein alternatives Ausführungsbeispiel der vorliegenden Erfindung, das im Unterschied zu Fig. 2 lediglich eine andere Ausgestaltung des Primärschwingers 102 aufweist. Im Gegensatz zu dem in Fig. 2 gezeigten Primärschwinger ist der Primärschwinger 102 von Fig. 3 als unterbrochener Rahmen ausgestaltet, wobei die Probemasse 300 innerhalb der Rahmenöffnung des Primärschwingers 102 angeordnet ist. Der Primärschwinger ist ebenso wie in Fig. 2 über vier Combdrives 104 in eine Primärschwingung versetzbar, welche über Federbalken 202, 204 auf die Probemasse übertragen wird. Die Federbalken 202, 204 der Anregungs-Probemasse-Kopplungseinrichtung sind in x-Richtung steif, da sie auf Zug bzw. Druck beansprucht werden, während sie in y-Richtung elastisch sind, so daß die Coriolis-Schwingung der Probemasse nicht auf den Primärschwinger 102 übertragen werden kann. Die Probemasse ist ferner wie in Fig. 2 über eine Probemassen-Erfassungs-Kopplungseinrichtung mit dem Sekundärschwinger 502 verbunden, wobei die Kopplungseinrichtung ebenso wie in Fig. 2 eine starre Verbindungseinrichtung 410, zwei Federbalken 404, 406 und eine weitere starre Verbindungseinrichtung 412 aufweist.

In Fig. 3 ist eine zu Fig. 2 alternative Ausgestaltung der Primärschwingeraufhängung zu sehen, welche ebenfalls aus Verankerungspunkten 110 und Federbalken 108 besteht, die wiederum so angeordnet sind, daß der Primärschwinger lediglich in x-Richtung ausgelenkt werden kann, jedoch nicht in y-Richtung, da in diesem Fall die Federbalken 108 auf Zug bzw. Druck beansprucht werden. Der Primärschwinger ist ferner nicht in z-Richtung auslenkbar, da hierbei eine Krümmung der steifen Seite nötig wäre, was aufgrund der bereits beschriebenen Querschnittsgeometrie der Balken jedoch nicht ohne weiteres möglich ist.

Das Funktionsprinzip der in den Fig. 2 und 3 gezeigten Drehratensensoren stellt sich noch einmal wie folgt dar. Über Combdrives 104 wird der Primärschwinger zu einer linearen Schwingung in x-Richtung angeregt. Die Primärschwingeraufhängung 108, 110 führt die Bewegung in x-Richtung und unterdrückt im Idealfall alle anderen Auslenkungen des Primärschwingers 102. Über die Federeinrichtung der Anregungs-Probemasse-Kopplungseinrichtung wird diese Primärschwingung auf die Probemasse 300, die auch als Coriolis-Schwinger bezeichnet werden kann, übertragen. Die Federeinrichtung der Anregungs-Probemasse-Kopplungseinrichtung 200 besitzt im Idealfall eine bestimmte endliche Federsteifigkeit in y-Richtung und jeweils eine unendlich hohe Federsteifigkeit für alle anderen Auslenkungen. Bei einer Drehung des Sensors um die z-Achse wird durch die auftretenden Coriolis-Kräfte eine zusätzliche Schwingung der Probemasse 300 in y-Richtung angeregt. Durch die Eigenschaften der Primärschwingeraufhängung wird diese Schwingung in y-Richtung nicht auf den Primärschwinger 102 übertragen. Dadurch wird ein Rückwirken der Coriolis-Kräfte auf die Primärschwingung bzw. auf die Anregungs- oder Erregungseinrichtung effektiv unterdrückt.

Durch die Kombination der Probemassen-Erfassungs-Kopplungseinrichtung und insbesondere deren Federbalken 404, 406, welche idealisiert gesagt eine bestimmte endliche Federsteifigkeit in x-Richtung haben und jeweils eine unendlich hohe Federsteifigkeit für alle anderen Auslenkungen haben, und der Sekundärschwingeraufhängung, die die Verankerungspunkte 508 und die Federbalken 510, 512 aufweist, kann die Schwingung der Probemasse in x-Richtung nicht auf den Sekundärschwinger 502 übertragen werden. Eine Bewegung der Probemasse in y-Richtung kann dagegen auf den Sekundärschwinger 502 übertragen werden und mit den Erfassungs-Elektroden bzw. Erfassungs-Combdrives, differentiell gemessen werden, wodurch das Meßsignal 700 proportional zur Drehrate erhalten wird.

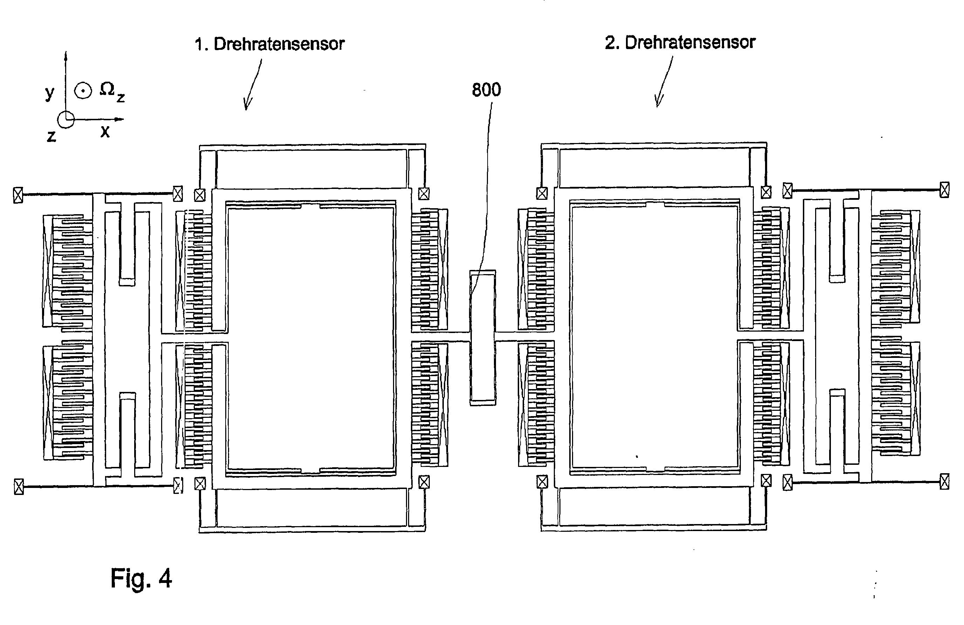

Im nachfolgenden wird auf Fig. 4 Bezug genommen, das ein erfindungsgemäßes Drehratensensorsystem darstellt, welches sich aus einem ersten Drehratensensor und einem zweiten Drehratensensor zusammensetzt, deren Primärschwinger über eine Primärkopplungseinrichtung 800 miteinander gekoppelt sind. Sowohl der erste Drehratensensor als auch der zweite Drehratensensor sind identisch zu dem in Fig. 3 gezeigten und beschriebenen Drehratensensor gemäß dem zweiten Ausführungsbeispiel der vorliegenden Erfindung ausgeführt. Die Primärkopplungseinrichtung 800 umfaßt vier Federbalken, wobei jeweils, wie es in Fig. 4 gezeigt ist, zwei Federbalken über eine steife Verbindungseinrichtung miteinander verbunden sind, wobei diese Verbindungseinrichtung jedoch nicht mit dem Substrat, auf dem das Drehratensensorsystem aufgebaut ist, verbunden sind. Damit wird sichergestellt, daß die gegenphasige Bewegung der beiden Primärschwinger eine echte Eigenschwingung darstellt. Dies hat zum Vorteil, daß im geregelten Betrieb die Primärschwingung mit einer einzigen gemeinsamen Regelung, die typischerweise einen Amplitudenregler und einen Phasenregler, betrieben werden kann. Die Differenz der Ausgangssignale der Erfassungseinrichtungen des linken und des rechten Drehratensensors liefert dann das Drehratensignal. Störsignale durch Beschleunigung und Vibrationen, welche auf beide Drehratensensoren gleichphasig auftreten, werden dabei automatisch unterdrückt bzw. sehr stark reduziert.

An dieser Stelle sei darauf hingewiesen, daß es sich bei dem Drehratensensorsystem von Fig. 4 um zwei miteinander gekoppelte mechanische Schwinger handelt, wobei ein prominentes Beispiel für ein solches Schwingersystem eine Stimmgabel ist. Ein solches System von gekoppelten Schwingern führt bei einer bestimmten ersten Eigenfrequenz eine gleichphasige Schwingung durch, derart, daß beide Primärschwinger gleichzeitig nach links bzw. nach rechts ausgelenkt werden. Aufgrund der bereits dargestellten Unterdrückung gleichphasiger Störungen wird jedoch der gegenphasige Modus bevorzugt, der eine etwas höhere Eigenfrequenz als der gleichphasige Modus hat. In diesem Modus stellt sich eine Eigenschwingung des

Systems ein, derart, daß sich die beiden Schwinger automatisch aufeinander synchronisieren und daß damit die anzusteuernden insgesamt acht Combdrives mittels einer einzigen Ansteuerung betrieben werden können, wobei immer zwei in Fig. 4 vertikal übereinander gezeichnete Combdrives zusammengeschlossen sind. Aufgrund der gegenphasigen Schwingung müssen die in Fig. 4 links vom linken Primärschwinger dargestellten Combdrives gleichphasig mit den rechts vom zweiten Drehratensensor dargestellten Anregungscombdrives angesteuert werden, während die inneren Combdrives zwischen den beiden Primärschwingern gleichphasig zueiander, jedoch gegenphasig zu den äußeren Combdrives angesteuert werden müssen.

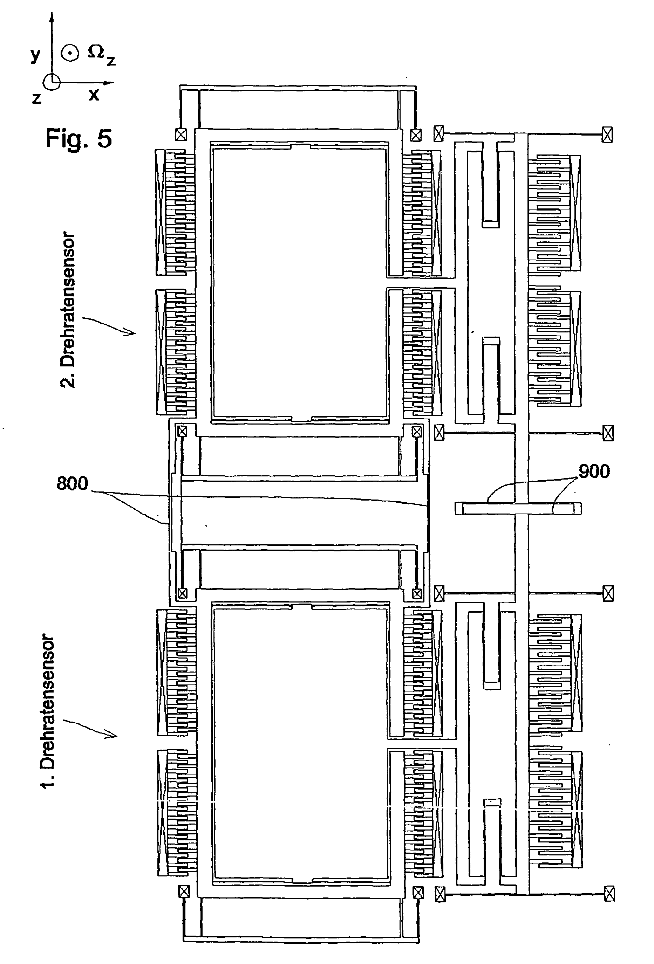

Eine weitere Verfeinerung zeigt das in Fig. 5 gezeigte Drehratensensorsystem, bei dem zwei Drehratensensoren von Fig. 2 ähnlich wie in Fig. 4 über die Primärkopplungseinrichtung 800 hinsichtlich ihrer Primärschwinger gekoppelt sind. Zusätzlich zu dem in Fig. 4 gezeigten Drehratensensorsystem ist jedoch in Fig. 5 ebenfalls eine Sekundärkopplungseinrichtung 900 vorgesehen, so daß auch die Sekundärschwinger der Erfassungseinrichtungen des ersten und des zweiten Drehratensensors miteinander gekoppelt sind, so daß neben den Primärschwingern der beiden Drehratensensoren auch die Sekundärschwinger der beiden Drehratensensoren eine echte gegenphasige Eigenschwingung ausführen können.

Der Vorteil der Kopplung der Sekundärschwinger der beiden Drehratensensoren besteht vor allem beim sogenannten kraftkompensierten Betrieb der Sekundärschwingung. Im kraftkompensierten Betrieb wird versucht, durch Ansteuerung der Erfassungs-Elektrodenanordnungen mit geeigneten elektrischen Signalen die Auslenkung des Sekundärschwingers auf Null zu halten. Die Coriolis-Kraft wird somit durch Anlegen entsprechender Spannungen an die Erfassungs-Elektrodenanordnungen der Erfassungseinheit kompensiert, so daß das zur Kompensation nötige elektrische Signal ein Maß für die Coriolis-Kraft und damit für die auf den Sensor wirkende Drehrate ist.

Da auch die Sekundärschwingung der beiden Sekundärschwinger eine echte Eigenschwingung darstellt, kann das Drehratensensorsystem mit einer einzigen Regelung für beide Sekundärschwinger betrieben werden, da die beiden Sekundärschwinger eine exakt gegenphasige Schwingung aufgrund der Primärkopplungseinrichtung 900 ausführen.

## Patentansprüche

1. Drehratensensor zum Erfassen einer Drehung desselben um eine Drehachse, mit folgenden Merkmalen:
einem Substrat;
einer Probemasse (300) zum Ausführen einer Primärschwingung und einer Sekundärschwingung aufgrund der Coriolis-Kraft;
einer Anregungseinheit (100), die folgende Merkmale aufweist:
einen Primärschwinger (102),
eine Erregungseinrichtung (104) zum Anregen einer Primärschwingung des Primärschwingers (102); und
eine Primärschwingeraufhängung (108, 110, 112), die derart ausgestaltet ist, daß sie den Primärschwinger (102) gegenüber dem Substrat so hält, daß der Primärschwinger die Primärschwingung ausführen kann, und daß eine Auslenkung in Richtung der Sekundärschwingung im wesentlichen unterbunden ist;
einer Erfassungseinheit (500), die folgende Merkmale aufweist:
einen Sekundärschwinger (502);
eine Sensoreinrichtung (504) zum Erfassen der Sekundärschwingung des Sekundärschwingers (502); und
eine Sekundärschwingeraufhängung (508, 510, 512), die derart ausgestaltet ist, daß sie den Sekundärschwinger gegenüber dem Substrat so hält, daß der Sekundärschwinger die Sekundärschwingung ausführen kann, und daß eine Auslenkung des Sekundärschwingers in Richtung der Primärschwingung im wesentlichen unterbunden ist;
einer Anregungs-Probemasse-Kopplungseinrichtung (200) zum Übertragen der Primärschwingung von dem Primärschwinger (106) der Anregungseinrichtung (100) auf die Probemasse (300), wobei die Anregungs-Probemasse-Kopplungseinrichtung eine Federeinrichtung (202, 204) aufweist, die in Richtung der Sekundärschwingung elastisch ist und in Richtung der Primärschwingung im wesentlichen steif ist; und
einer Probemasse-Erfassungs-Kopplungseinrichtung (400) zum Übertragen der Sekundärschwingung von der Probemasse (300) auf den Sekundärschwinger (502) der Erfassungseinheit (500), wobei die Probemasse-Erfassungs-Kopplungseinrichtung (400) eine Federeinrichtung (406, 408, 410, 412) aufweist, die in Richtung der Primärschwingung elastisch ist und in Richtung der Sekundärschwingung im wesentlichen steif ist.

2. Drehratensensor nach Anspruch 1,
bei dem die Primärschwingeraufhängung, die Sekundärschwingeraufhängung, die Anregungs-Probemassen-Kopplungseinrichtung und die Probemassen-Erfassungs-Kopplungseinrichtung eine Mehrzahl von Federbalken aufweisen, wobei jeder Federbalken einen im wesentlichen rechteckigen Querschnitt mit einer langen und einer kurzen Seite aufweist, wobei die kurze Seite des Federbalkens in der Richtung angeordnet ist, in der die jeweilige Einrichtung bzw. Aufhängung elastisch ist, wobei die lange seitenlänge des Federbalkens in einer Richtung angeordnet ist, in der die jeweilige Einrichtung bzw. Aufhängung der Federbalken im wesentlichen steif ist, und wobei der Federbalken ferner so eingebaut ist, daß er in der dritten Richtung, in der die jeweilige Einrichtung bzw. Aufhängung im wesentlichen steif ist, entlang seiner Längsachse belastet wird.

3. Drehratensensor nach Anspruch 1 oder 2, bei dem sowohl die Erregungseinrichtung (100) als auch die Sensoreinrichtung eine elektrostatische Kammstruktur umfassen.

4. Drehratensensor nach einem der vorhergehenden Ansprüche, bei dem die Primärschwingeraufhängung folgende Merkmale aufweist:
zumindest je zwei Verankerungspunkte auf zwei gegenüberliegenden Seiten des Primärschwingers (102);
zwei starre Verbindungsstrukturen (112);
erste Federbalken (108) zwischen den Verankerungspunkten und der Verbindungsstruktur (112);
zweite Federbalken zwischen dem Primärschwinger (102) und der starren verbindungsstruktur (112), so daß kein Federbalken den Primärschwinger direkt mit einem Verankerungspunkt (110) verbindet.

5. Drehratensensor nach einem der vorhergehenden Ansprüche, bei dem die Anregungs-Probemassen-Kopplungseinrichtung zwei Federbalken (202, 204) aufweist, die zwischen dem Primärschwinger und der Probemasse so angeordnet sind, daß die Primärschwingung entlang ihrer Längsachse gerichtet ist, um eine starre Übertragung der Primärschwingung von dem Primärschwinger auf die Probemasse sicherzustellen.

6. Drehratensensor nach einem der vorhergehenden Ansprüche, bei dem die Probemassen-Erfassungs-Kopplungseinrichtung zumindest zwei Federbalken (404, 406) und eine steife Verbindungsstruktur (408) aufweist, wobei ein Federbalken die Probemasse mit der Verbindungsstruktur verbindet und der andere Federbalken die Verbindungsstruktur mit dem Sekundärschwinger verbindet,
wobei die beiden Balken parallel zueinander sind und so angeordnet sind, daß die Sekundärschwingung entlang ihrer Längsachse wirkt, um eine starre Übertragung der Sekundärschwingung sicherzustellen.

7. Drehratensensor nach einem der vorhergehenden Ansprüche, bei dem der Primärschwinger im wesentlichen rahmenförmig ist und eine Rahmenöffnung aufweist, und bei dem die Probemasse in der Rahmenöffnung des Primärschwingers angeordnet ist.

8. Drehratensensor nach einem der vorhergehenden Ansprüche, bei dem die Primärschwingung eine lineare Schwingung parallel zur x-Achse ist, der Drehratensensor um eine z-Achse gedreht wird, und die Sekundärschwingung aufgrund der Coriolis-Kraft als lineare Bewegung parallel zur y-Achse stattfindet, wobei die x-, die y- und die z-Achse zueinander orthogonal sind.

9. Drehratensensor nach einem der vorhergehenden Ansprüche, bei dem die Primärschwingeraufhängung, die Sekundärschwingeraufhängung, die Anregungs-Probemasse-Kopplungseinrichtung und die Probemasse-Erfassungs-Kopplungseinrichtung grundsätzlich jeweils drei lineare und drei rotatorische Freiheitsgrade aufweisen, und wobei die Primärschwingeraufhängung, die Sekundärschwingeraufhängung, die Anregungs-Probemasse-Kopplungseinrichtung und die Probemasse-Erfassungs-Kopplungseinrichtung so ausgestaltet sind, daß immer fünf der sechs Freiheitsgrade im wesentlichen unterbunden sind, während nur ein einziger Freiheitsgrad nicht unterbunden ist.

10. Drehratensensorsystem mit folgenden Merkmalen:
einem ersten Drehratensensor nach einem der vorhergehenden Ansprüche;
einem zweiten Drehratensensor nach einem der vorhergehenden Ansprüche;
einer Primärkopplungseinrichtung (800) zum Koppeln des Primärschwingers des ersten Drehratensensors mit dem Primärschwinger des zweiten Drehratensensors.

11. Drehratensensorsystem nach Anspruch 10, das ferner folgendes Merkmal aufweist:
eine Sekundärkopplungseinrichtung (900) zum Koppeln des Sekundärschwingers des ersten Drehratensensors mit dem Sekundärschwinger des zweiten Drehratensensors.

12. Drehratensensorsystem nach Anspruch 10 oder 11, das ferner folgendes Merkmal aufweist:
eine Regelung zum gemeinsamen Anregen sowohl des ersten Drehratensensors als auch des zweiten Drehratensensors.

13. Drehratensensorsystem nach Anspruch 11 oder 12, das angeordnet ist, um in einem Kraftkompensations-Betriebsmodus betrieben zu werden, und das ferner folgendes Merkmal aufweist:
eine Regelung zum gemeinsamen Betreiben sowohl des Sekundärschwingers des ersten Drehratensensors als auch des Sekundärschwingers des zweiten Drehratensensors.

## Claims

1. Rotation rate sensor for detecting a rotation thereof on a rotation axis, comprising:
a substrate;
a test mass (300) for performing a primary oscillation and a secondary oscillation due to the Coriolis force;
an excitation unit (100), comprising:
a primary oscillator (102),
excitation means (104) for exciting a primary oscillation of the primary oscillator (102); and
a primary oscillator suspension (108, 110, 112), configured such that it supports the primary oscillator (102) opposite to the substrate such that the primary oscillator may execute the primary oscillation and that a displacement in the direction of the secondary oscillation is substantially inhibited;
a detection unit (500), comprising:
a secondary oscillator (502);
sensor means (504) for detecting the secondary oscillation of the secondary oscillator (502); and
a secondary oscillator suspension (508, 510, 512) configured such that it supports the secondary oscillator opposite to the substrate such that the secondary oscillator may perform the secondary oscillation and that a displacement of the secondary oscillator in the direction of the primary oscillation is substantially inhibited;
excitation test mass coupling means (200) for transferring the primary oscillation from the primary oscillator (106) of the excitation means (100) to the test mass (300), the excitation test mass coupling means comprising spring means (202, 204), which is resilient in the direction of the secondary oscillation and is substantially rigid in the direction of the primary oscillation; and
test mass detection coupling means (400) for transferring the secondary oscillation from the test mass (300) to the secondary oscillator (502) of the detection unit (500), the test mass detection coupling means (400) comprising spring means (406, 408, 410, 412), which is resilient in the direction of the primary oscillation and is substantially rigid in the direction of the secondary oscillation.

2. Rotation rate sensor according to claim 1,
wherein the primary oscillator suspension, the secondary oscillator suspension, the excitation test mass coupling means and the test mass detection coupling means comprise a plurality of spring beams, each spring beam having a substantially rectangular cross-section with a long and a short side, the short side of the spring beam being arranged in the direction in which the respective means and/or suspension is resilient, the long side length of the spring beam being arranged in a direction in which the respective means and/or suspension of the spring beams is substantially rigid, and the spring beam being further incorporated such that it is stressed along its longitudinal axis in the third direction, in which the respective means and/or suspension is substantially rigid.

3. Rotation rate sensor according to claim 1 or 2, wherein both the excitation means (100) and the sensor means include an electrostatic comb structure.

4. Rotation rate sensor according to one of the preceding claims, wherein the primary oscillator suspension comprises:
at least two anchor points at each of two opposite sides of the primary oscillator (102);
two rigid connecting structures (112);
first spring beams (108) between the anchor points and the connecting structure (112);
second spring beams between the primary oscillator (102) and the rigid connecting structure (112) so that no spring beam directly connects the primary oscillator to an anchor point (110).

5. Rotation rate sensor according to one of the preceding claims, wherein the excitation test mass coupling means comprises two spring beams (202, 204) which are arranged between the primary oscillator and the test mass such that the primary oscillation is directed along the longitudinal axis thereof in order to ensure rigid transfer of the primary oscillation from the primary oscillator to the test mass.

6. Rotation rate sensor according to one of the preceding claims, wherein the test mass detection coupling means comprises at least two spring beams (404, 406) and one rigid connecting structure (408), one spring beam connecting the test mass to the connecting structure and the other spring beam connecting the connecting structure to the secondary oscillator,
wherein the two beams are parallel to each other and arranged such that the secondary oscillation acts along the longitudinal axis thereof in order to ensure a rigid transfer of the secondary oscillation.

7. Rotation rate sensor according to one of the preceding claims, wherein the primary oscillator substantially has the form of a frame and comprises a frame opening, and wherein the test mass is arranged in the frame opening of the primary oscillator.

8. Rotation rate sensor according to one of the preceding claims, wherein the primary oscillation is a linear oscillation parallel to the x axis, the rotation rate sensor is rotated on a z axis, and the secondary oscillation due to the Coriolis force takes place as a linear motion parallel to the y axis, the x, y, and the z axes being orthogonal to one another.

9. Rotation rate sensor according to one of the preceding claims, wherein the primary oscillator suspension, the secondary oscillator suspension, the excitation test mass coupling means and the test mass detection coupling means basically comprise three linear and three rotatory degrees of freedom each, and wherein the primary oscillator suspension, the secondary oscillator suspension, the excitation test mass coupling means and the test mass detection coupling means are configured such that five of the six degrees of freedom are always substantially inhibited, while only one single degree of freedom is not inhibited.

10. Rotation rate sensor system, comprising:
a first rotation rate sensor according to one of the preceding claims;
a second rotation rate sensor according to one of the preceding claims;
primary coupling means (800) for coupling the primary oscillator of the first rotation rate sensor to the primary oscillator of the second rotation rate sensor.

11. Rotation rate sensor system according to claim 10, further comprising:
secondary coupling means (900) for coupling the secondary oscillator of the first rotation rate sensor to the secondary oscillator of the second rotation rate sensor.

12. Rotation rate sensor system according to claim 10 or 11, further comprising:
a controller for a common excitation of both the first rotation rate sensor and the second rotation rate sensor.

13. Rotation rate sensor system according to claim 11 or 12, arranged in order to be operated in a force balance operating mode, further comprising:
a controller for a common operation of both the secondary oscillator of the first rotation rate sensor and the secondary oscillator of the second rotation rate sensor.

## Revendications

1. Capteur de vitesse de rotation destiné à capter une rotation de celui-ci autour d'un axe de rotation, aux caractéristiques suivantes :
un substrat;
une masse d'essai (300) destinée à réaliser une oscillation primaire et une oscillation secondaire par suite de la force de Coriolis ;
une unité d'excitation (100), présentant les caractéristiques suivantes :
un oscillateur primaire (102),
un dispositif d'excitation (104) destiné à activer une oscillation primaire de l'oscillateur primaire (102) ; et
une suspension d'oscillateur primaire (108, 110, 112) qui est réalisée de sorte qu'elle maintienne l'oscillateur primaire (102) par rapport au substrat de sorte que l'oscillateur primaire puisse réaliser l'oscillation primaire, et qu'une déviation dans la direction de l'oscillation secondaire soit substantiellement évitée ;
une unité de détection (500), présentant les caractéristiques suivantes :
un oscillateur secondaire (502) ;
un dispositif capteur (504) destiné à détecter l'oscillation secondaire de l'oscillateur secondaire (502) ; et
une suspension d'oscillateur secondaire (508, 510, 512) qui est réalisée de sorte qu'elle maintienne l'oscillateur secondaire par rapport au substrat de sorte que l'oscillateur secondaire puisse réaliser l'oscillation secondaire, et qu'une déviation de l'oscillateur secondaire dans la direction de l'oscillation primaire soit substantiellement empêchée ;
un dispositif de couplage excitation - masse d'essai (200) destiné à transmettre l'oscillation primaire de l'oscillateur primaire (106) du dispositif d'excitation (100) à la masse d'essai (300), le dispositif de couplage excitation - masse d'essai présentant un dispositif de ressort (202, 204) qui est élastique dans la direction de l'oscillation secondaire et est sensiblement rigide dans la direction de l'oscillation primaire ; et
un dispositif de couplage masse d'essai - détection (400) destiné à transmettre l'oscillation secondaire de la masse d'essai (300) à l'oscillateur secondaire (502) de l'unité de détection (500), le dispositif de couplage masse d'essai - détection (400) présentant un dispositif de ressort (406, 408, 410, 412) qui est élastique dans la direction de l'oscillation primaire et est sensiblement rigide dans la direction de l'oscillation secondaire.

2. Capteur de vitesse de rotation selon la revendication 1,
dans lequel la suspension d'oscillateur primaire, la suspension d'oscillateur secondaire, le dispositif de couplage excitation - masse d'essai et le dispositif de couplage masse d'essai - détection présentent une pluralité de poutres élastiques, chaque poutre élastique présentant une section sensiblement rectangulaire avec un côté long et un côté court, le côté court des poutres élastiques étant disposé dans la direction dans laquelle le dispositif ou suspension respectif est élastique, la longueur de côté longue de la poutre élastique étant disposée dans une direction dans laquelle le dispositif ou suspension respectif des poutres élastiques est sensiblement rigide, et la poutre élastique étant, par ailleurs, incorporée de sorte qu'elle soit sollicitée le long de son axe longitudinal dans la troisième direction dans laquelle le dispositif ou suspension respectif est sensiblement rigide.

3. Capteur de vitesse de rotation selon la revendication 1 ou 2, dans lequel tant le dispositif d'excitation (100) que le dispositif capteur comportent une structure en peigne électrostatique.

4. Capteur de vitesse de rotation selon l'une des revendications précédentes, dans lequel la suspension d'oscillateur primaire présente les caractéristiques suivantes :
au moins chaque fois deux points d'ancrage de deux côtés opposés de l'oscillateur primaire (102) ;
deux structures de connexion rigides (112) ;
des premières poutres élastiques (108) entre les points d'ancrage et la structure de connexion (112) ;
deux poutres élastiques entre l'oscillateur primaire (102) et la structure de connexion rigide (112), de sorte qu'aucune poutre élastique ne relie l'oscillateur primaire directement à un point d'ancrage (110).

5. Capteur de vitesse de rotation selon l'une des revendications précédentes, dans lequel le dispositif de couplage excitation - masse d'essai présente deux poutres élastiques (202, 204) qui sont disposées entre l'oscillateur primaire et la masse d'essai de sorte que l'oscillation primaire soit orientée le long de son axe longitudinal, afin d'assurer une transmission rigide de l'oscillation primaire de l'oscillateur primaire à la masse d'essai.

6. Capteur de vitesse de rotation selon l'une des revendications précédentes, dans lequel le dispositif de couplage masse d'essai - détection présente au moins deux poutres élastiques (404, 406) et une structure de connexion rigide (408), une poutre élastique reliant la masse d'essai à la structure de connexion et l'autre poutre élastique reliant la structure de connexion à l'oscillateur secondaire,
les deux poutres étant parallèles entre elles et disposées de sorte que l'oscillation secondaire agisse le long de leur axe longitudinal, afin d'assurer une transmission rigide de l'oscillation secondaire.

7. Capteur de vitesse de rotation selon l'une des revendications précédentes, dans lequel l'oscillateur primaire est substantiellement en forme de cadre et présente une ouverture de cadre, et dans lequel la masse d'essai est disposée dans l'ouverture de cadre de l'oscillateur primaire.

8. Capteur de vitesse de rotation selon l'une des revendications précédentes, dans lequel l'oscillation primaire est une oscillation linéaire parallèle à l'axe x, le capteur de vitesse de rotation est tourné autour d'un axe z, et l'oscillation secondaire a lieu par suite de la force de Coriolis comme déplacement linéaire parallèle à l'axe y, l'axe x, l'axe y et l'axe z étant orthogonaux entre eux.

9. Capteur de vitesse de rotation selon l'une des revendications précédentes, dans lequel la suspension d'oscillateur primaire, la suspension d'oscillateur secondaire, le dispositif de couplage excitation
- masse d'essai et le dispositif de couplage masse d'essai - détection présentent, chacun, en principe trois degrés de liberté linéaires et trois degrés de liberté de rotation, et la suspension d'oscillateur primaire, la suspension d'oscillateur secondaire, le dispositif de couplage excitation
- masse d'essai et le dispositif de couplage masse d'essai - détection sont réalisés de sorte que cinq des six degrés de liberté sont toujours substantiellement empêchés, tandis qu'un seul degré de liberté n'est pas empêché.

10. Système de capteurs de vitesse de rotation, aux caractéristiques suivantes :
un premier capteur de vitesse de rotation selon l'une des revendications précédentes ;
un deuxième capteur de vitesse de rotation selon l'une des revendications précédentes ;
un dispositif de couplage primaire (800) destiné à coupler l'oscillateur primaire du premier capteur de vitesse de rotation à l'oscillateur primaire du deuxième capteur de vitesse de rotation.

11. Système de capteurs de vitesse de rotation selon la revendication 10, présentant, par ailleurs, la caractéristique suivante :
un dispositif de couplage secondaire (900) destiné à coupler l'oscillateur secondaire du premier capteur de vitesse de rotation à l'oscillateur secondaire du deuxième capteur de vitesse de rotation.

12. Système de capteurs de vitesse de rotation selon la revendication 10 ou 11, présentant, par ailleurs, la caractéristique suivante :
une régulation pour l'excitation en commun tant du premier capteur de vitesse de rotation que du deuxième capteur de vitesse de rotation.

13. Système de capteurs de vitesse de rotation selon la revendication 11 ou 12, qui est disposé de manière à fonctionner en mode de fonctionnement à compensation de force, et présentant, par ailleurs, la caractéristique suivante :
une régulation pour le fonctionnement en commun tant de l'oscillateur secondaire du premier capteur de vitesse de rotation que de l'oscillateur secondaire du deuxième capteur de vitesse de rotation.
